# EUROPEAN PATENT APPLICATION

(11) **EP 1 530 211 A1**
(43) Date of publication of application: **11.05.2005**
(21) Application number: 02743802.7
(22) Date of filing: 03.07.2002
(51) Int. Cl.: G11B 11/105

(54) **HIGH-DENSITY MAGNETO-OPTICAL RECORDING/REPRODUCING APPARATUS AND HIGH-DENSITY MAGNETO-OPTICAL RECORDING/REPRODUCING METHOD**

(71) Applicant: FUJITSU LIMITED, Kawasaki-shi, Kanagawa 211-8588 (JP)
(72) Inventor: ITAKURA, Akihiro Fujitsu Limited, Kawasaki-shi, Kanagawa 211-8588 (JP)
(74) Representative: Seeger, Wolfgang, Dipl.-Phys.
(86) International application number: PCT/JP2002/006738
(87) International publication number: WO 2004/006239

(57) **Abstract**

It is an object of the present invention to provide a high density magneto-optical recording/reproducing apparatus and a high density magneto-optical recording/reproducing method for recording a mark on a recording medium in a manner such that an edge position of a mark reproduced from the recording medium may not be varied. The magneto-optical recording/reproducing apparatus for recording/reproducing an information mark on/from a magneto-optical recording medium includes means for determining the length of a first recording information mark and means for adjusting the intensity of a recording magnetic field for recording a second information mark depending on the length of the first information mark recorded immediately before the second recording information mark.

## Description

### TECHNICAL FIELD

The present invention relates generally to a high-density magneto-optical recording/reproducing apparatus and a high-density magneto-optical recording/reproducing method, and particularly to a high-density magneto-optical recording/reproducing apparatus and a high-density magneto-optical recording/reproducing method that are suitable for recording/reproducing a small mark.

### BACKGROUND ART

Recording methods for recording information on a magneto-optical disk include an optical modulation method and a magnetic field modulation method.

The optical modulation method involves modulating the irradiation amount of a laser beam according to the information being recorded. In this method, the minimum size of a recording mark is determined by features of the optical system.

On the other hand, the magnetic field modulation method involves recording information by irradiating a laser beam of a fixed value and reversing the magnetic field of the laser beam. According to this method, a limited reversal time period is needed in order to reverse the magnetic field, and an edge area created by the reversal of the magnetic field may vary when the frequency of the modulated magnetic field is high. Thereby, in a case of reproducing a recorded signal having a high frequency, increased jitters in the reproduced signal may be a problem. To counter such a problem, a method of arranging the laser beam into a pulse and irradiating this laser beam pulse is proposed.

According to the magnetic field modulation method, when a laser beam is irradiated on a recording surface, the temperature of the recording surface rises, and when this temperature rises above the Curie point, the magnetization of the recording surface is lost. When the irradiation of the laser beam is ended, a recording mark is formed according to a direction of the magnetization that is applied to the recording surface when the temperature of the recording surface falls below the Curie point.

In the case where a laser beam pulse is irradiated to conduct magnetic field modulation recording, the generation of the recording magnetization may not be influenced by the above-described magnetization reversal time period, and instead, the recording magnetization may be determined based on the irradiation timing of the laser pulse. In this way, jitters of a reproduced signal may be reduced. Accordingly, the magnetic field modulation method may be suitable for recording small marks.

In the case of reproducing recorded information, generally, the smallest dimension of a recorded mark that may be detected and read is determined by parameters corresponding to a wavelength of a reading laser beam and a numerical aperture NA of an optical system. Specifically, a spot size of a focused laser beam is proportional to the laser beam wavelength and inversely proportional to the numerical aperture NA. Accordingly, the shorter the laser beam wavelength and the larger the numerical aperture NA, the smaller the spot size of the focused laser beam may be and the smaller the minimum dimension of a readable recorded mark may be.

To reproduce a small recorded mark, a method is provided of using medium technologies referred to as MSR (Magnetically Induced Super Resolution), DWDD (Domain Wall Displacement Detection), and MAMMOS (Magnetic Amplifying Magneto-Optical System) in addition to the reproducing technology of the reproducing apparatus as described above. According to this method, a mark of a size that is smaller than the minimum size determined by the above parameters of the reproducing optical system may be detected and reproduced.

As can be appreciated from the above descriptions, high-density magneto-optical recording/reproducing may be realized by recording information using the magnetic field modulation method and reproducing recorded information using a laser beam with a short wavelength and an optical system with a high NA and/or using medium technologies such as the DWDD.

In the magnetic field modulation method, as opposed to the optical modulation method, an edge position of a mark may be adjusted without using a recording pattern. However, when the length of a recorded mark is short (a small mark is recorded), the edge position of the recorded mark may vary even when using the magnetic field modulation method. This phenomenon occurs owing to the reasons described below.

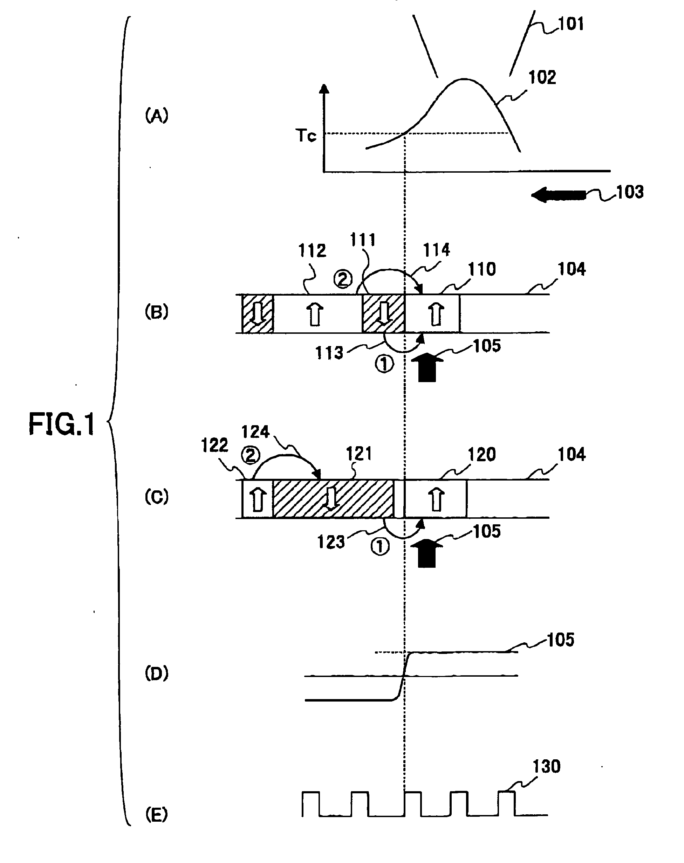

FIG.1 illustrates information recording according to a conventional magnetic field modulation method. FIG.1(A) shows a temperature distribution 102 of an optical disk in a case where laser beam 101 is incident on the disk. In this drawing, Tc represents the Curie temperature, and arrow 103 represents a direction of recording tracks on the disk with respect to the incident laser beam 101. FIGS.1(B) and 1(C) are diagrams illustrating marks recorded on a recording layer 104 of the tracks on the disk. FIG.1(B) shows a mark 110 that is currently being recorded, a mark 111 recorded before recording mark 110, and a mark 112 recorded before recording mark 111. Also, in this drawing, arrow 105 represents the direction of a recording magnetic field for recording mark 110. FIG.1(C) shows a mark 120 that is currently being recorded, a mark 121 recorded before recording mark 120, and a mark 122 recorded before recording mark 121. Also, in this drawing, arrow 105 represents the direction of a magnetic field for recording mark 120. FIG.1(D) illustrates the switching of the recording magnetic field 105 from the recording magnetic field for recording the previously recorded mark 111 or 121 to the recording magnetic field for recording mark 110 or 120 that is currently being recorded. FIG.1(E) illustrates a pulse 130 for inducing light emission of the laser beam used in the magnetic field modulation method. In FIG.1(E), it is assumed that the laser beam emits light when the pulse 130 is at a high level.

In the magnetic field modulation method, the mark currently being recorded is influenced by a demagnetizing field of the mark recorded before the mark currently being recorded. For example, if the mark 111 recorded immediately before the currently recorded mark 110 corresponds to a short mark 111 as is shown in FIG.1(B), the currently recorded mark 110 is influenced by the demagnetizing fields of the short mark 111 and the mark 112 recorded before this short mark 111. Specifically, a demagnetizing field 113 of the mark 111 and a demagnetizing field 114 of the mark 112 are superposed. When the mark 111 corresponds to a short mark, the demagnetizing field 113 of the mark 111 and the demagnetizing field 114 of the mark 112 close in on each other to cancel each other out, and thereby, the mark 110 may be formed by the recording magnetic field 105 at the switching point of the recording magnetic field 105 shown in FIG.1(D). That is, the switching point from the mark 111 to the mark 110 may be arranged to be close to the switching point of the magnetic field 105.

On the other hand, if the mark 121 recorded immediately before the currently recorded mark 120 corresponds to a long mark as is shown in FIG.1(C), the formation of the currently recorded mark 120 is influenced by a demagnetizing field 123 of the mark 121 but not by a demagnetizing field 124 of the mark 122. In such case, the demagnetizing field 123 of the mark 121 is added to the recording magnetic field 105 being applied for forming the mark 120, and thereby, the recording magnetic field is substantially increased. Accordingly, in a case where the mark 121 immediately before the currently recorded mark 120 corresponds to a long mark as is shown in FIG.1(C), the mark 120 may be formed before the switching point of the recording magnetic field 105 shown in FIG.1(D). Thus, according to the conventional method, the edge position of a currently recorded mark may vary depending on whether the mark recorded immediately before the currently recorded mark corresponds to a short mark or a long mark.

### DISCLOSURE OF THE INVENTION

It is an object of the present invention to provide a high-density magneto-optical recording/reproducing apparatus and a high-density magneto-optical recording/reproducing method that can solve one or more problems of the related art.

Specifically, it is an object of the present invention to provide a high-density magneto-optical recording/reproducing apparatus and a high-density magneto-optical recording/reproducing method for recording of a mark on a recording medium in a manner such that an edge position of a mark reproduced from the recording medium may not be varied.

It is another object of the present invention to provide a high-density magneto-optical recording/reproducing apparatus and a high-density magneto-optical recording/reproducing method for correcting a variation in an edge position of a mark upon reproducing the mark from the recording medium.

According to an aspect of the present invention, a magneto-optical recording/reproducing apparatus that records/reproduces an information mark on/from a magneto-optical recording medium is provided, the apparatus including means for determining the length of a first recording information mark and means for adjusting the intensity of a recording magnetic field for recording a second information mark according to the length of the first information mark recorded immediately before the second recording information mark.

According to an aspect of the present invention, an edge position of a reproduced mark may not be varied, and thereby, high density data recording may be realized.

### BRIEF DESCRIPTION OF THE DRAWINGS

Other objects, features and advantages of the present invention will become more apparent from the following detailed description when read in conjunction with the accompanying drawings.
FIG. 1 is a diagram illustrating information recording according to a magnetic field modulation method according to the related art;
FIG. 2 is a diagram illustrating a first embodiment of the present invention;
FIG. 3 is a diagram illustrating a second embodiment of the present invention;
FIG. 4 is a diagram illustrating the second embodiment of the present invention;
FIG. 5 is a diagram illustrating a third embodiment of the present invention;
FIG. 6 is a diagram illustrating a fourth embodiment of the present invention;
FIG. 7 is a diagram illustrating a fifth embodiment of the present invention;
FIG. 8 is a diagram illustration a sixth embodiment of the present invention;
FIG. 9 is a diagram illustrating a signal format according to a seventh embodiment of the present invention;
FIG. 10 is a diagram illustrating a reproducing signal timing of a phase detection pattern according to the seventh embodiment of the present invention; and
FIG. 11 is a diagram illustrating a schematic construction of the seventh embodiment of the present invention.

### BEST MODE FOR CARRYING OUT THE INVENTION

Next, a description will be given, with reference to the drawings, of embodiments of the present invention with reference to the accompanying drawings.

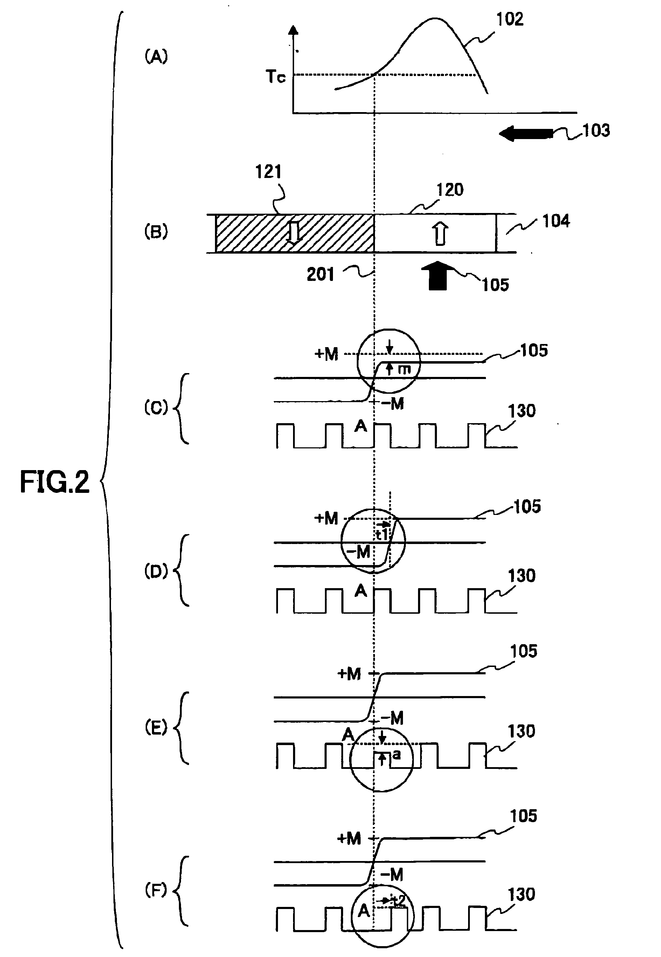

FIG.2 illustrates a first embodiment of the present invention. According to the first embodiment, upon recording a mark on a recording medium, a correction is made on the mark to be recorded in order to maintain an edge position of the mark to be reproduced at an appropriate position. FIG.2 particularly illustrates exemplary methods of correcting a mark to be recorded in a case where a long mark 121 is recorded immediately before a mark 120 that is currently being recorded. FIG.2(A) shows a temperature distribution 102 of an optical disk when a laser beam is incident to the disk, where Tc represents the Curie temperature. Also, in this drawing, arrow 103 represents the recording direction of tracks on the disk based on the direction of the incident laser beam. FIG.2(B) shows marks recorded on a recording layer 104 of the tracks on the disk. Specifically, this drawing shows a mark 120 that is currently being recorded, and a long mark 121 that is recorded before the currently recorded mark 120. Also, in this drawing, arrow 105 represents a recording magnetic field for recording the mark 120. FIG.2(C) shows the recording magnetic field 105 that is switched from a recording magnetic field for the previously recorded mark 121 to the recording magnetic field for the currently recorded mark 120. In the present example, -M and +M represent the intensities of the recording magnetic field used in a case where the mark recorded immediately before the current mark corresponds to a short mark. Also, FIG.2(C) shows a pulse 130 that induces light emission of the laser beam used in the magnetic modulation method, the laser beam being arranged to emit light when the pulse 130 is at a high level. In the present example, A represents the intensity of the pulse 130 for inducing light emission of the laser beam in the case where the mark recorded immediately before the current mark corresponds to a short mark. It is noted that the dotted line 201 extending across FIGS.2(A) through 2(F) represents a switching point (timing) of the recording magnetic field 105 and the light emission timing for the pulse 130 inducing light emission of the laser beam in the case where the mark recorded immediately before the currently recorded mark corresponds to a short mark.

FIG.2(C) illustrates an exemplary correction method that is used in recording the mark 120. Specifically, FIG.2(C) illustrates a method of controlling the amplitude of the recording magnetic field 105. In the example of FIG.2(C), the point at which the recording magnetic field 105 is switched from the recording magnetic field -M for recording the long mark 121 to the recording magnetic field +M for recording the mark 120 is arranged to be the same as the switching point of the recording magnetic field 105 in the case where the mark recorded immediately before the current mark corresponds to a short mark. On the other hand, the intensity of the magnetic field for recording the mark 120 is reduced by a predetermined value (m) with respect to the intensity +M of the recording magnetic field used in the case where the mark recorded immediately before the current mark corresponds to a short mark (i.e., the intensity is set to (M-m)).

As for the pulse 130 for inducing light emission of the laser beam, the light emission timing is arranged to be the same as that in the case where the mark recorded immediately before the current mark corresponds to a short mark, and the intensity of the pulse 130 is also arranged to be the same as the intensity A used in the case where the mark recorded immediately before the current mark corresponds to a short mark.

FIG.2(D) shows another exemplary correction method used in recording the mark 120. Specifically, FIG.2(D) illustrates a method of controlling the switching timing of the recording magnetic field 105. In the example of FIG.2D, the point (timing) at which the recording magnetic field 105 is switched from the recording magnetic field -M for recording the long mark 121 to the recording magnetic field +M for recording the mark 120 is delayed by time t1 with respect to the switching point (timing) of the recording magnetic field in the case where the mark recorded immediately before the current mark corresponds to a short mark. On the other hand, the intensity of the magnetic field for recording the mark 120 is not changed in this example, and is set to +M as in the case where the mark recorded immediately before the current mark corresponds to a short mark.

As for the pulse 130 for inducing light emission of the laser beam, the light emission timing for the pulse 130 is arranged to be the same as that used in the case where the mark recorded immediately before the current mark corresponds to a short mark, and the intensity of the pulse 130 is also arranged to be the same as the intensity A used in the case where the mark recorded immediately before the current mark corresponds to a short mark.

FIG.2(E) shows another exemplary correction method used in recording the mark 120. Specifically, FIG.2(E) illustrates a method of controlling the amplitude of the pulse 130 for inducing the light emission of the laser beam. In the example of FIG.2(E), the light emission timing for the pulse 130 inducing light emission of the laser beam is arranged to be the same as that in the case where the mark recorded immediately before the current mark corresponds to a short mark. On the other hand, the intensity of the pulse 130 for inducing light emission of the laser beam is reduced by a predetermined value (a) with respect to the intensity A used in the case where the mark recorded immediately before the current mark corresponds to a short mark (i.e., the intensity is set to (A-a)).

As for the recording magnetic field 105, the switching point (timing) is arranged to be the same as that in the case where the mark recorded immediately before the current mark corresponds to a short mark, and the amplitude is also arranged to be the same as the amplitude -M, +M for the case in which the mark recorded immediately before the current mark corresponds to a short mark.

FIG.2(F) shows another exemplary correction method used in recording the mark 120. Specifically, FIG.2(F) illustrates a method of controlling the light emission timing for the pulse 130 inducing light emission of the laser beam. In the example of FIG.2(F), the light emission timing for the pulse 130 inducing the light emission of the laser beam is delayed by time t2 with respect to the timing for the case in which the mark recorded immediately before the current mark corresponds to a short mark. On the other hand, the intensity of the pulse 130 for inducing the light emission of the laser beam is arranged to be the same as the intensity A used in the case where the mark recorded immediately before the current mark corresponds to a short mark.

As for the recording magnetic field 105, the switching point (timing) is arranged to be the same as that in the case where the mark recorded immediately before the current mark corresponds to a short mark, and the amplitude is also arranged to correspond to the amplitude -M, +M for the case in which the mark recorded immediately before the current mark corresponds to a short mark.

As can be appreciated from the above descriptions, in the case where the mark 121 recorded immediately before the current mark 120 corresponds to a long mark, correction may be made upon recording the current mark 120 so that the edge position of the mark 120 may not vary when the mark 120 is reproduced.

It is noted that in the above described embodiments of the present invention, the case in which the mark recorded immediately before the current mark corresponds to a short mark is used as a basis for controlling the recording of the current mark. However, corrections may be made for preventing a variation in the edge position of a mark to be reproduced upon recording the mark according to other embodiments, for example, using the case in which the mark recorded immediately before the current mark corresponds to a long mark as a basis where the recording magnetic field 105 for a mark to be recorded and the pulse 130 for inducing light emission of the laser beam may be controlled in a reverse manner with respect to the embodiments described in FIG.2.

Also, it is noted that in the above described embodiments, the length of the mark recorded immediately before the current mark is used as a basis; however, the length of a mark recorded further back may be used in combination with the mark recorded immediately before the current mark to realize an even more accurate control.

Also, it is noted that in the above described embodiments, two levels of mark lengths are used. However, any number of levels may be used.

Also, it is noted that the correction values m, t1, a, and t2 may correspond to fixed values that are stored in the high-density magneto-optical recording/reproducing apparatus, and read out according to the pattern (mark) recorded immediately before the current pattern (mark). Alternatively, to realize a more accurate control, a test pattern may be recorded in a test area of the recording medium, and the correction values may be determined by reading the test pattern. In this way, the correction values m, t1, a, and t2 may be accurately determined for each individual recording medium.

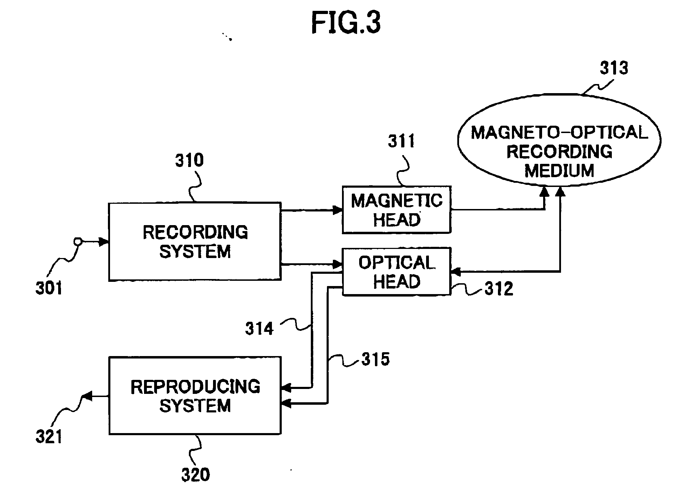

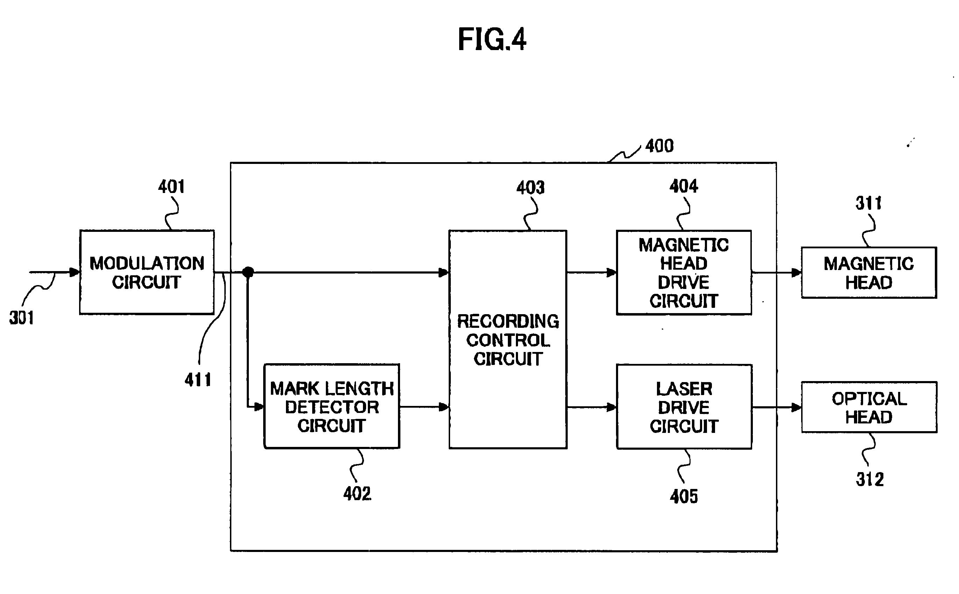

In the following, a second embodiment of the present invention is described with reference to FIGS.3 and 4.

FIG.3 is a block diagram showing a configuration of a high-density magneto-optical recording/reproducing apparatus according to an embodiment of the present invention. The high-density magneto-optical recording/reproducing apparatus of FIG.3 includes a recording system 310, a magnetic head 311, an optical head 312, and a reproducing system 320. In a recording operation of the present apparatus according to one embodiment, user data 301 to be recorded are input to the recording system 310. In turn, the recording system 310 processes the input user data 301 into a recording signal and outputs the processed signal to the magnetic head 311 and the optical head 312. The magnetic head 311 and the optical head 312 record the signal processed by the recording system 310. In a reproducing operation according to one embodiment, the optical head 312 reads signals recorded on a disk. An MO signal 314 and a clock mark signal 315 read by the optical head 312 are transmitted to the reproducing system 320 and the reproduction signals are processed and output as user data 321.

FIG.4 is a block diagram showing a configuration of a recording system according to the second embodiment of the present invention. It is noted that the recording system of FIG.4 may be implemented as the recording system 310 of FIG.3. Also, it is noted that the same numerical references are used to represent common elements represented in FIGS.3 and 4.

The present embodiment provides a recording system for correcting a mark to be recorded upon recording the mark on a recording medium. The recording system of FIG.4 includes a modulation circuit 401, and a recording compensation circuit 400. The recording compensation circuit 400 includes a mark length detector circuit 402, a recording control circuit 403, a magnetic head drive circuit 404, and a laser drive circuit 405.

In FIG.4, user data 301 may be input to the modulation circuit 401 and recording modulation may be executed therein. Then, the mark length of the user data modulated by the modulation circuit 401 may be detected by the mark length detector circuit 402. According to the present embodiment, when the mark length detector circuit 402 determines that the mark length of a mark is greater than or equal to a predetermined threshold value, it sends a signal indicating that a long mark has been detected to the recording control circuit 403. In turn, upon receiving the signal indicating the detection of the long mark from the mark length detector circuit 402, the recording control circuit 403 controls the amplitude or timing of the recording magnetic field or the pulse inducing light emission of the recording laser beam for recording a next mark that is recorded after this long mark according to one of the control methods of the first embodiment as illustrated in FIG.2. After conducting recording control according to the one of the methods of the first embodiment as illustrated in FIG.2, the recording control circuit 403 supplies drive signals to the magnetic head drive circuit 404 and the laser drive circuit 405. In turn, the magnetic head drive circuit 404 and the laser drive circuit 405 respectively drive the magnetic head 311 and the optical head 312 based on the drive signals supplied thereto and record signals on the magneto-optical recording medium 313.

As is described above, according to the present embodiment, a long mark may be detected, and appropriate correction may be made to a mark to be recorded right after this long mark upon recording this mark on the magneto-optical recording medium 313.

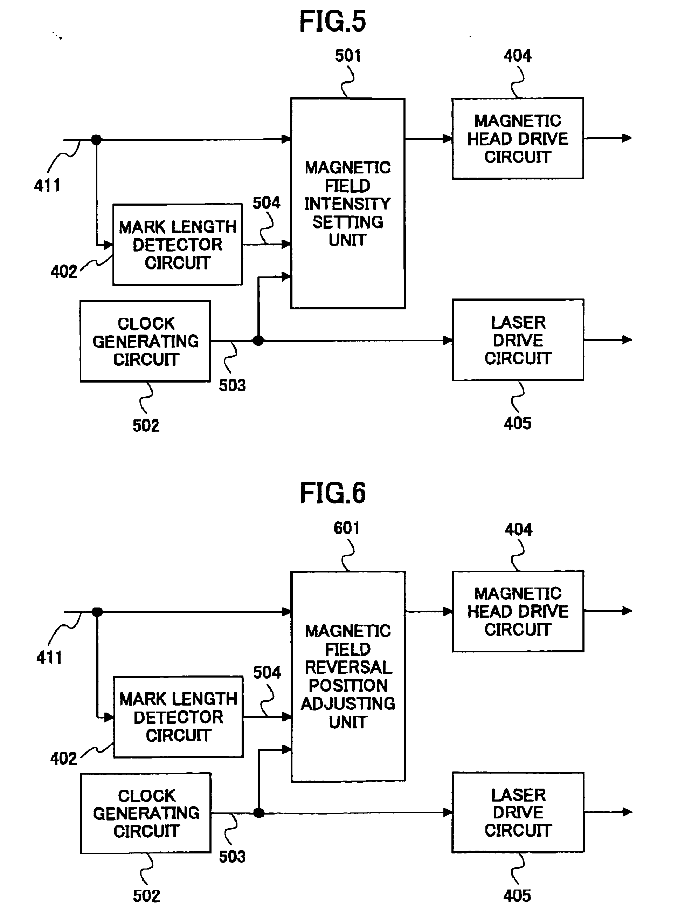

In the following, exemplary configurations of the recording compensation circuit 400 of FIG.4 are described with reference to FIGS.5 through 8. It is noted that the same numerical references are used to represent common elements showing the drawings.

FIG.5 is a block diagram showing a configuration of a recording compensation circuit 400 according to a third embodiment of the present invention that executes an operation according to the method shown in FIG.2(C).

The recording compensation circuit 400 of FIG.5 includes a mark length detector circuit 402, a magnetic field intensity setting unit 501, a magnetic head drive circuit 404, a laser drive circuit 405, and a clock generating circuit 502. According to the present example, recording data from the modulation circuit 401 of FIG.4 are supplied to the mark length detector circuit 402 and the magnetic field intensity setting circuit 501. Also, a clock 503 generated by the clock generating circuit 502 is supplied to the magnetic field intensity setting circuit 501 and the laser drive circuit 405. The magnetic field intensity setting circuit 501 and the laser drive circuit 405 operate based on the clock 503 supplied thereto.

When a long mark having a length that is greater than or equal to a predetermined length is detected by the mark length detector circuit 402, a detection signal 504 is supplied to the magnetic field intensity setting circuit 501. In turn, the magnetic field intensity setting circuit 501 receiving the detection signal 504 conducts a control process upon recording a mark immediately following this long mark. In this control process, the point (timing) at which the recording magnetic field is switched from the recording magnetic field -M for recording a long mark to the recording magnetic field +M for recording the present mark is arranged to be the same as the switching point (timing) in the case where the mark recorded immediately before corresponds to a short mark. On the other hand, in this control process, the intensity of the magnetic field for recording the present mark is controlled so as to be reduced by a predetermined value (m) with respect to the intensity M used in the case where the mark recorded immediately before corresponds to a short mark, and this magnetic field intensity (M-m) is set to the magnetic head drive circuit 404. In turn, the magnetic head drive circuit 404 drives the magnetic head 311 so that is generates a magnetic field having the intensity (M-m).

The laser drive circuit 405 receives just the clock 503, and thereby the optical head is driven by the laser drive circuit 405 in a manner identical to the case in which the mark recorded immediately before corresponds to a short mark.

FIG.6 shows a configuration of a recording compensation circuit 400 according to a fourth embodiment of the present invention that executes an operation according to the method illustrated by FIG.2D.

The recording compensation circuit 400 of FIG.6 includes a mark length detector circuit 402, a magnetic field reversal position adjusting unit 601, a magnetic head drive circuit 404, a laser drive circuit 405, and a clock generating circuit 502. According to the present example, recording data 411 from the modulation circuit 401 of FIG.4 are supplied to the mark length detector circuit 402 and the magnetic field reversal position adjusting unit 601. Also, a clock 503 generated by the clock generating circuit 502 is supplied to the magnetic field reversal position adjusting unit 601 and the laser drive circuit 405. The magnetic field reversal position adjusting unit 601 and the laser drive circuit 405 operate based on the clock 503 supplied thereto.

When a long mark having a length that is greater than or equal to a predetermined length is detected by the mark length detector circuit 402, a detection signal 504 is supplied to the magnetic field reversal position adjusting unit 601. In turn, the magnetic field reversal position adjusting unit 601 receiving the detection signal conducts a control process upon recording a mark immediately following this long mark. In this control process, the point (timing) at which the recording magnetic field is switched from the recording magnetic field -M for recording a long mark to the recording magnetic field +M for recording the present mark is delayed by time t1 with respect to the switching point (timing) in the case where the mark recorded immediately before corresponds to a short mark. On the other hand, in this control process, the intensity of the magnetic field for recording the present mark is arranged to be the same as the intensity M used in the case where the mark recorded immediately before corresponds to a short mark.

The laser drive circuit 405 receives just the clock 503, and thereby the optical head is driven by the laser drive circuit 405 in a manner identical to the case in which the mark recorded immediately before corresponds to a short mark.

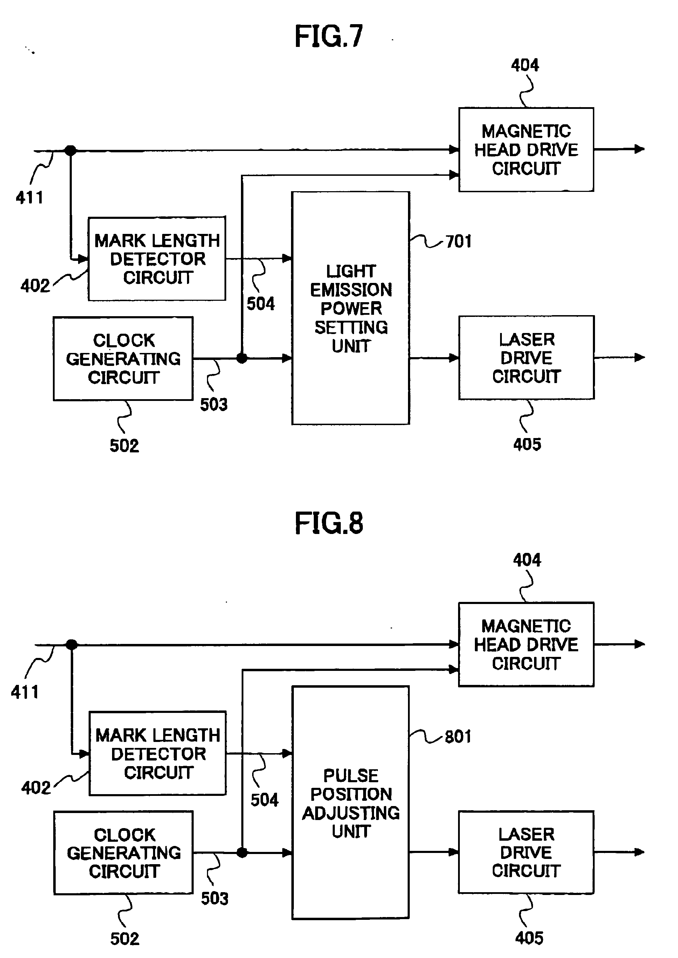

FIG.7 shows a configuration of a recording compensation circuit 400 according to a fifth embodiment of the present invention that executes an operation according to the method illustrated in FIG.2(E).

The recording compensation circuit 400 of FIG.7 includes a mark length detector circuit 402, a light emission power setting unit 701, a magnetic head drive circuit 404, a laser drive circuit 405, and a clock generating circuit 502. According to the present example, recording data 411 from the modulation circuit 401 of FIG.4 are supplied to the mark length detector circuit 402 and the magnetic head drive circuit 404. Also, a clock 503 generated by the clock generating circuit 502 is supplied to the light emission power setting unit 701 and the magnetic head drive circuit 404. The light emission power setting unit 701 and the magnetic head drive circuit 404 operate based on the clock 503 supplied thereto.

When a long mark having a length that is greater than or equal to a predetermined length is detected by the mark length detector circuit 402, a detection signal 504 is supplied to the light emission power setting unit 701. In turn, the light emission power setting unit 701 receiving the detection signal conducts a control process upon recording a mark immediately following this long mark. In this control process, the light emission timing for the pulse inducing the light emission of the laser beam is arranged to be the same as the timing in the case where the mark recorded immediately before corresponds to a short mark. On the other hand, in this control process, the amplitude of the pulse for inducing the light emission of the laser beam is reduced by a predetermined value (a) with respect to the amplitude A used in the case where the mark recorded immediately before corresponds to a short mark (i.e., the amplitude is set to (A-a)).

The magnetic head drive circuit 404 receives the clock 503 and the recording data 411, and thereby, the magnetic head is driven by the magnetic head drive circuit 404 to generate a magnetic field according to the recording data in a manner identical to the case in which the mark recorded immediately before corresponds to a short mark.

FIG.8 shows a configuration of a recording compensation circuit 400 according to a sixth embodiment of the present invention that executes an operation according to the method illustrated in FIG.2(F).

The recording compensation circuit 400 of FIG.8 includes a mark length detector circuit 402, a pulse position adjusting unit 801, a magnetic head drive circuit 404, a laser drive circuit 405, and a clock generating circuit 502. According to the present example, recording data 411 from the modulation circuit 401 of FIG.4 are supplied to the mark length detector circuit 402 and the magnetic head drive circuit 404. Also, a clock 503 generated by the clock generating circuit 502 is supplied to the pulse position adjusting unit 801 and the magnetic head drive circuit 404. The pulse position adjusting unit 801 and the magnetic head drive circuit 404 operate based on the clock 503 supplied thereto.

When a long mark having a length that is greater than or equal to a predetermined length is detected by the mark length detector circuit 402, a detection signal 504 is supplied to the pulse position adjusting unit 801. In turn, the pulse position adjusting unit 801 receiving the detection signal conducts a control process upon recording a mark immediately following this long mark. In this control process, the light emission timing for the pulse inducing the light emission of the laser beam is delayed by time t2 with respect to the timing in the case where the mark recorded immediately before corresponds to a short mark. On the other hand, in this control process, the amplitude of the pulse for inducing the light emission of the laser beam is arranged to be the same as the amplitude A used in the case where the mark recorded immediately before corresponds to a short mark.

The magnetic head drive circuit 404 receives the clock 503 and the recording data 411, and thereby, the magnetic head is driven by the magnetic head drive circuit 404 to generate a magnetic field according to the recording data in a manner identical to the case in which the mark recorded immediately before corresponds to a short mark.

According to the embodiments described above, a high-density magneto-optical recording/reproducing apparatus and a high-density magneto-optical recording/reproducing method for recording a mark on a recording medium in a manner such that the edge position of a mark to be reproduced from the recording medium may not vary.

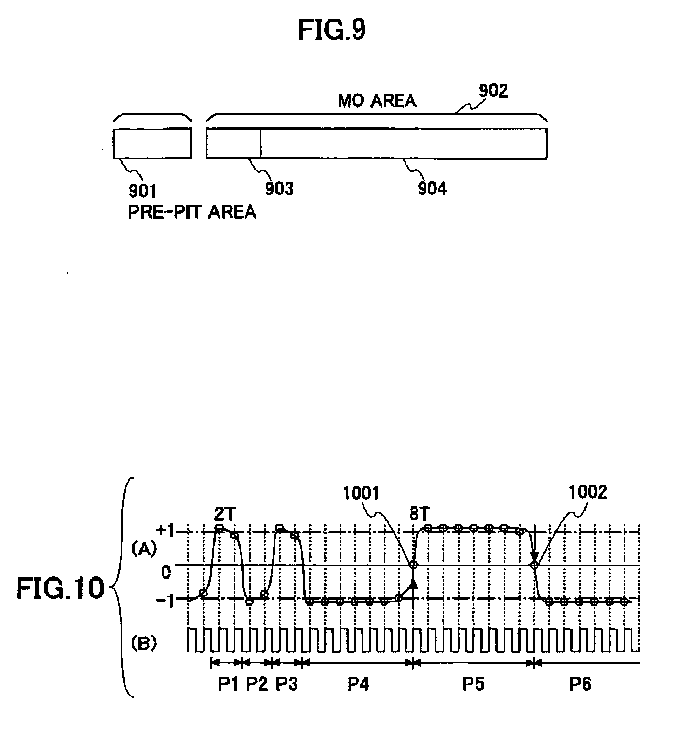

In the following, a seventh embodiment of the present invention is described with reference to FIGS.9 through 11. According to the seventh embodiment, an edge position of a mark to be reproduced is corrected to an appropriate position upon reproducing the mark from a recording medium.

FIG.9 shows a configuration of an exemplary signal format for recording a position detection pattern in order to correct the position of an edge of a mark to be reproduced to an appropriate position upon reproducing the mark from the recording medium. This signal format includes a pre-pit area 901 in which ID signals are provided and an MO recording area 902. The MO recording area 902 includes a phase detection pattern portion 903 in which a phase detection pattern according to an embodiment of the present invention is provided and a user data portion 904.

FIG.10 shows a reproducing signal timing of the phase detection pattern provided in the phase detection pattern portion 903. FIG.10(A) illustrates an example of a phase detection pattern reproduced from the phase detection pattern portion 903. In this example, the phase pattern includes a sequence of 2T signals (i.e., patterns P1, P2, and P3) corresponding to short patterns, and a sequence of 8T signals (i.e., patterns P4, P5, and P6) corresponding to long patterns. FIG.10(B) illustrates a clock signal for detecting the phase detection pattern.

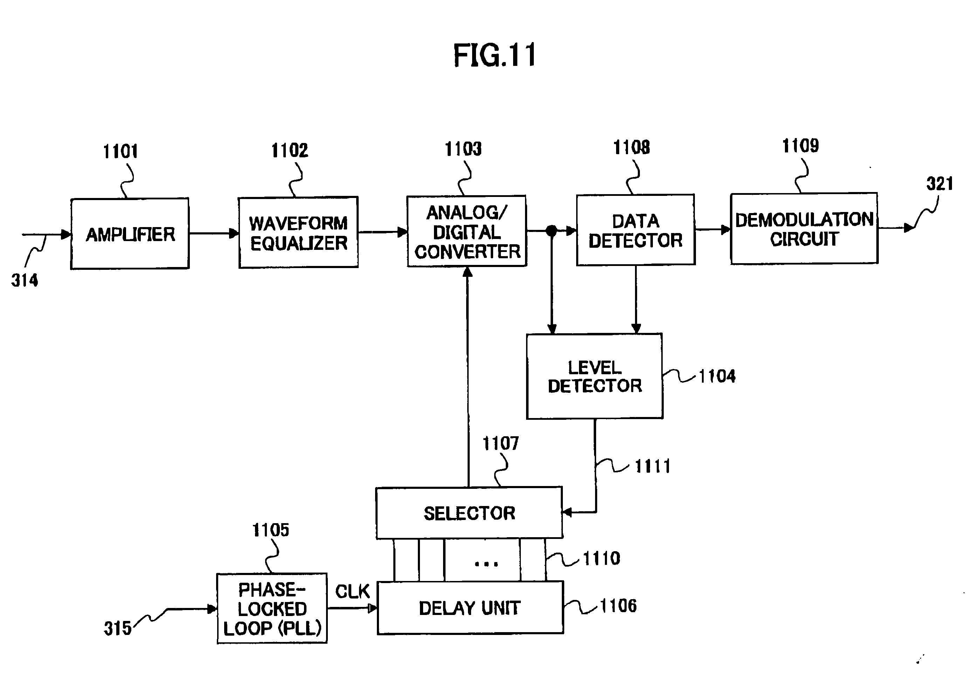

FIG.11 is a block diagram showing an exemplary configuration of a reproducing system according to an embodiment of the present invention. It is noted that the reproducing system of FIG.11 may correspond to the reproducing system 320 shown in FIG.3. In FIG.11, the reproducing system includes an amplifier 1101, a waveform equalizer 1102, an analog/digital converter 1103, a level detector 1104, a phase-locked loop (PLL) 1105, a delay unit 1106, a selector 1107, a data detector 1108, and a demodulation circuit 1109.

According to the present embodiment, in order to correct a position of an edge of a mark to be reproduced to an appropriate position upon reproducing the mark from a recording medium, a clock to be supplied to the analog/digital converter 1103 may be selected by the selector 1107 using a phase detection pattern that is reproduced from the phase detection pattern portion 903 of FIG.9. Such an operation is described below with reference to FIG.10.

According to an embodiment, the clock mark 315 supplied to the reproducing system 320 by the optical head 312 of the high-density magneto-optical recording/reproducing apparatus shown in FIG.3 is supplied to the PLL 1105 of FIG.11. In turn the PLL 1105 generates a clock CLK that is in sync with the clock mark 315. The clock CLK is sent to the delay unit 1106, and a delayed clock CLK that is delayed by a predetermined time is output from each tap 1110 of the delay unit 1106. The selector 1107 selects one of the clocks CLK output from the taps 1110 according to an input signal 1111 from the level detector 1104.

When the level detector 1104 is set to an initial state, it outputs a signal for selecting a predetermined tap such as a center tap to the selector 110, and monitors the level of the output from the analog/digital converter 1103.

The level detector 1104 controls the selector 1107 to select a tap 1110 of the delay unit 1106 so that the sampling values of the short patterns P1, P2, and P3 forming a sequence of 2T signals as illustrated in FIG.10 correspond to either +1 or -1, that is, sampling values that do not correspond to intermediate values close to zero. In this way, a suitable clock phase may be determined for the case in which the recording pattern immediately before corresponds to a short pattern.

In FIG.10(A), the points indicated by circles represent values that are sampled and digitally converted by the analog/digital converter 1103 according to a suitable clock phase condition for the present short mark. The rise points of the clock CLK represent sampling points of the analog/digital converter 1103.

As is illustrated in FIG.10(A), when a mark (pattern) recorded immediately before corresponds to a 2T signal (i.e., P1, P2, or P3), a sampling value close to the expected value -1 or +1 may be obtained. However, when the pattern recorded immediately before corresponds to an 8T signal such as P4, a front edge of the next pattern P5 is shifted towards the end portion of the preceding pattern P4 as is illustrated by circle 1001 so that a sampling value of 0 is obtained even though the expected sampling value is -1. Similarly, the front edge of the next pattern P6 is shifted towards the end portion of the preceding pattern P5 as is illustrated by circle 1002, and a sampling value of 0 is obtained even though the expected sampling value is +1. Accordingly, when sampling the patterns P5 and P6, a clock that is shifted backwards by half a clock unit is preferably supplied to the analog/digital converter 1103 in the example of FIG.10. By supplying such a clock, for example, the analog/digital converter 1103 may sample the sampling point 1002 at a timing half a clock unit earlier so as to obtain a sampling value close to the expected value of +1.

Accordingly, the level detector 1104 monitors the output of the analog/digital converter 1103 and controls the selector 1107 to sequentially select a tap of the delay unit 1106 with a short delay time to determine a delay time with which a sampling value of +1 may be obtained as the sampling value of circle (sampling point) 1002.

In this way, a suitable clock phase may be determined for the case in which the recording pattern (mark) immediately preceding the present pattern corresponds to a long pattern.

The suitable clock phase in the case where an immediately preceding recording pattern (mark) corresponds to a short pattern (mark) and the suitable clock phase in the case where an immediately preceding recording pattern (mark) corresponds to a long pattern (mark) determined according to the above described procedures are stored in the level detector 1104.

In the following, an exemplary process of actually reproducing user data 904 is described. When reproducing user data 904, the data detector 1108 monitors the output of the analog/digital converter 1103. When the data detector 1108 determines that a pattern currently being reproduced corresponds to a short pattern having a length that is less than or equal to a predetermined length, it sends a signal to the level detector 1104 to select a suitable clock phase for the case in which the immediately preceding recording pattern corresponds to a short pattern. Upon receiving this signal, the level detector 1104 selects a tap for selecting a suitable clock phase for the case in which the immediately preceding recording pattern corresponds to a short pattern. On the other hand, when the data detector 1108 determines that a pattern that is currently being reproduced corresponds to a long pattern having a length that is greater than or equal to a predetermined length, it sends a signal to the level detector 1104 to select a suitable clock phase for the case in which the immediately preceding recording pattern corresponds to a long pattern from the clock phases stored in the level detector 1104. Upon receiving this signal, the level detector 1104 selects a tap for selecting the suitable clock phase for the case in which the immediately preceding recording pattern corresponds to a long pattern.

In this way, a suitable phase may be selected for the clock that is to be supplied to the analog/digital converter 1103 regardless of whether the pattern immediately preceding the present pattern corresponds to a short pattern or a long pattern. Then, data converted by the analog/digital converter 1103 and detected by the data detector 1108 may be sent to the demodulation circuit 1109 and the detected user data 321 may be output.

As can be appreciated from the above descriptions, according to the present embodiment, even when an edge position of a mark to be reproduced varies, the clock phase for sampling the mark may be suitably adjusted so that high density data recording may be realized on a recording medium.

Further, it is noted that the present invention is not limited to the specific embodiments described above, and variations and modifications may be made without departing from the scope of the present invention.

## Claims

1. A magneto-optical recording/reproducing apparatus that is adapted to record/reproduce an information mark on/from a magneto-optical recording medium using a laser beam and a magnetic field, the apparatus **characterized by** comprising:
means for determining a length of a first recording information mark; and
means for adjusting an intensity of a recording magnetic field for recording a second recording information mark according to the length of the first recording information mark that is recorded immediately before the second recording information mark.

2. A magneto-optical recording/reproducing apparatus that is adapted to record/reproduce an information mark on/from a magneto-optical recording medium using a laser beam and a magnetic field, the apparatus **characterized by** comprising:
means for determining a length of a first recording information mark; and
an adjustment unit for adjusting a switching point of a recording magnetic field for recording a second recording information mark according to the length of the first recording information mark that is recorded immediately before the second recording information mark.

3. A magneto-optical recording/reproducing apparatus that is adapted to record/reproduce an information mark on/from a magneto-optical recording medium using a laser beam and a magnetic field, the apparatus **characterized by** comprising:
means for determining a length of a first recording information mark; and
means for adjusting a light emission power of a laser beam for recording a second recording information mark according to the length of the first recording information mark that is recorded immediately before the second recording information mark.

4. A magneto-optical recording/reproducing apparatus that is adapted to record/reproduce an information mark on/from a magneto-optical recording medium using a laser beam and a magnetic field, the apparatus **characterized by** comprising:
means for determining a length of a first recording information mark; and
means for adjusting a light emission timing of a laser beam for recording a second recording information mark according to the length of the first recording information mark that is recorded immediately before the second recording information mark.

5. A method of recording an information mark on a magneto-optical recording medium using a laser beam and a magnetic field, the method **characterized by** comprising the steps of:
determining a length of a first recording information mark; and
adjusting an intensity of a recording magnetic field for recording a second recording information mark according to the length of the first recording information mark that is recorded immediately before the second recording information mark.

6. A method of recording an information mark on a magneto-optical recording medium using a laser beam and a magnetic field, the method **characterized by** comprising the steps of:
determining a length of a first recording information mark; and
adjusting a switching point of a magnetic field for recording a second recording information mark according to the length of the first recording information mark that is recorded immediately before the second recording information mark.

7. A magneto-optical recording method for recording an information mark on a magneto-optical recording medium using a laser beam and a magnetic field, the method **characterized by** comprising the steps of:
determining a length of a first recording information mark; and
adjusting a light emission power of a laser beam for recording a second recording information mark according to the length of the first recording information mark that is recorded immediately before the second recording information mark.

8. A magneto-optical recording method for recording an information mark on a magneto-optical recording medium using a laser beam and a magnetic field, the method **characterized by** comprising the steps of:
determining a length of a first recording information mark; and
adjusting a light emission timing of a laser beam for recording a second recording information mark according to the length of the first recording information mark that is recorded immediately before the second recording information mark.

9. The method as claimed in claim 5, further comprising the steps of:
recording predetermined information on a predesignated test area of the magneto-optical recording medium before recording user data; and
determining the adjustment of the intensity of the recording magnetic field based on a result of reproducing the recorded predetermined information.

10. The method as claimed in claim 6, further comprising the steps of:
recording predetermined information on a predesignated test area of the magneto-optical recording medium before recording user data; and
determining the adjustment of the switching point of the recording magnetic field based on a result of reproducing the recorded predetermined information.

11. The method as claimed in claim 7, further comprising the steps of:
recording predetermined information on a predesignated test area of the magneto-optical recording medium before recording user data; and
determining the adjustment of the light emission power of the laser beam based on a result of reproducing the recorded predetermined information.

12. The method as claimed in claim 8, further comprising the steps of:
recording predetermined information on a predesignated test area of the magneto-optical recording medium before recording user data; and
determining the adjustment of the light emission timing of the laser beam based on a result of reproducing the recorded predetermined information.

13. A method of reproducing an information mark from a magneto-optical recording medium, the method **characterized by** comprising the steps of:
sampling a reproduced information mark at a predetermined sampling timing;
determining a length of the reproduced information mark; and
adjusting a sampling timing of a next information mark to be sampled according to the length of the reproduced information mark.

14. A magneto-optical disk **characterized by** comprising:
a recording area that records a phase detection pattern for detecting an edge shift of an information mark, said recording area being provided at a portion of a magneto-optical recording area that stores user data.

15. The method as claimed in claim 13, further **characterized by** determining the adjustment of the sampling timing based on a result of reproducing a phase detection pattern that is recorded on the magneto-optical recording medium as claimed in claim 14.
